Europäisches Patentamt

European Patent Office

Office européen des brevets

(11) Veröffentlichungsnummer: **0 513 701 A2**

# (12) EUROPÄISCHE PATENTANMELDUNG

(21) Anmeldenummer: **92107844.0**

(22) Anmeldetag: **09.05.92**

(51) Int. Cl.5: **G08C** 15/06, G05B 17/02, G08C 19/16

(30) Priorität: **13.05.91 DE 4115498**

(43) Veröffentlichungstag der Anmeldung:
**19.11.92 Patentblatt 92/47**

(84) Benannte Vertragsstaaten:
**BE CH FR GB IT LI NL SE**

(71) Anmelder: **Lawrenz, Wolfhard, Prof. Dr.-Ing.**
**Waldweg 1**
**W-3340 Wolfenbüttel(DE)**

(72) Erfinder: **Lawrenz, Wolfhard, Prof. Dr.-Ing.**
**Waldweg 1**
**W-3340 Wolfenbüttel(DE)**

(74) Vertreter: **Lins, Edgar, Dipl.-Phys.**
**Patentanwälte Gramm + Lins**
**Theodor-Heuss-Strasse 1**
**W-3300 Braunschweig(DE)**

(54) **Verfahren zur Übertragung von Daten in einem Netzwerk.**

(57) In einem Netzwerk mit einer Mehrzahl von Knoten, die über das Netzwerk oder Sensoren Daten empfangen, die empfangenen Daten in vorgegebenen Routinen verarbeiten und Aktoren betätigen und/oder Daten über das Netzwerk aussenden, wobei eine Vielzahl von in einem Netzwerkprotokoll festgelegten, den Kommunikationsablauf sicherstellenden Schritten und Kontrollroutinen ausgeführt werden, erfolgt die Verarbeitung der Daten in Form von Variablen, die die einer Funktion entsprechenden und die betreffende Funktion charakterisierenden Daten und den Kommunikationsablauf und entsprechende Kontrollroutinen steuernde Verfahrensabläufe initialisierende Daten enthalten.

Dadurch ist es möglich, in der Applikationsebene ausschließlich mit den Variablen zu arbeiten und die Kommunikation in einer für die Variablen-Typen festgelegten Weise ablaufen zu lassen.

Fig. 2

EP 0 513 701 A2

Die Erfindung betrifft ein verfahren zur Übertragung von Daten in einem Netzwerk mit einer Mehrzahl von Knoten, die über das Netzwerk oder von Sensoren Daten empfangen, die empfangenen Daten in vorgebenen Routinen verarbeiten und Aktoren betätigen und/oder Daten über das Netzwerk aussenden, wobei eine Vielzahl von in einem Netzwerkprotokoll festgelegten, den Kommunikationsablauf sicherstellenden Schritten und Kontrollroutinen ausgeführt werden.

Es ist beispielsweise bekannt, die elektronischen Steuerungen in Automobilen dadurch aufeinander abzustimmen, daß eine Kommunikation zwischen den einzelnen elektronischen Steuerungen, z. B. für Motor, Getriebe, Bremsen, Gaspedal usw. stattfindet, um durch ein aufeinander abgestimmtes Verhalten der lokalen Einzelregler in den einzelnen Steuermodulen ein verbessertes Verhalten des Gesamtsystems zu erreichen. Die Bereitstellung einzelner Kommunikationskanäle für die erwünschte Kommunikation würde eine erhebliche Vermehrung des Verkabelungsaufwandes mit sich bringen. Diese Aufwand kann vermieden werden, wenn die einzelnen elektronischen Steuermodule und auch die Sensoren und Aktoren des Systems über ein Netzwerk miteinander kommunizieren, in dem mehrere logische Kommunikationskanäle über eine einzige physikalische Verbindung in einer Zeit-Multiplex-Übertragung miteinander kommunizieren. Die Abstimmung der Informationen, die Verifizierung einer erfolgten Datenübertragung und eines Empfangs bei dem vorgesehenen Empfänger, die Prioritätsregelung für miteinander konkurrierende Sendewünsche usw. erfolgt durch einen entsprechenden Aufbau der zu übertragenden Daten, der in einem Datenprotokoll für das Netzwerk festgelegt ist. Entsprechend definierte Protokolltypen sind beispielsweise CAN (Controller Area Network), VAN (Vehicle Area Network) und ABUS (Allgemeine bitserielle universelle Schnittstelle).

Mit einer OSI-Norm ist die Kommunikation in einem solchen Netzwerk in sieben Schichten (Layers) aufgegliedert worden. Um ein Netzwerk entsprechend vorgegebenen Steuerungskriterien zu programmieren, muß der Anwender die Netzwerkstruktur und die Netzwerkprotokolle berücksichtigen, um eine funktionierende Kommunikation zwischen den Knoten des Netzwerkes unter Berücksichtigung der Funktion der jeweiligen übertragenen Daten sicherzustellen. Ferner ist zu berücksichtigen, daß Verifikations- und Kontrollroutinen ausgeführt werden müssen. Die zunehmende Komplexität von Systemen mit interdependenten Steuerungen führt daher nicht nur zu sehr komplexen Programmierungsproblemen im Hinblick auf die zu berücksichtigenden Abhängigkeiten der Steuerungen untereinander sondern darüber hinaus zu erheblichen, durch das Netzwerk verursachten Programmierungsproblemen.

Es ist bereits der Vorschlag gemacht worden (Lawrenz "Systemüberlegung zur Vernetzung im Automobil" VDI-Berichte Nr. 819, 990, 159 bis 170, Lawrenz "Higher level drivers for networked Systems in cars" SAE 1991 Conference Papers, Detroit, USA), oberhalb der OSI-Schichten weitere Schichten vorzusehen, die als virtual commonly shared memory level und virtual commonly shared processor level bezeichnet werden. Diese virtuellen Schichten in dem VLSA-Modell (VLSA = Virtual Leveled System Architecture) haben die Aufgabe, die Kommunikationsebene des Netzwerks für den Anwender zu überdecken und eigenständig zu organisieren, um den Anwender für seine Applikationen von der Berücksichtigung der Organisation des Netzwerkes zu befreien. Konkrete Lösungsvorschläge zu diesen theoretischen strukturellen Überlegungen sind nicht bekanntgeworden.

Der Erfindung liegt die Aufgabe zugrunde, die Anwendung von Netzwerken zu ermöglichen, ohne für eine konkrete Applikation alle Randbedingungen der Kommunikation im Netzwerk sowie alle erforderlichen Kontroll- und Verifikationsroutinen berücksichtigen zu müssen.

Diese Aufgabe wird erfindungsgemäß bei der Verwendung eines eingangs erwähnten Verfahrens dadurch gelöst, daß die Verarbeitung der Daten in Form von Variablen erfolgt, die die einer Funktion entsprechenden und die betreffende Funktion charakterisierenden Daten und den Kommunikationsablauf und entsprechende Kontrollroutinen steuernde Verfahrensabläufe initialisierende Daten enthalten.

Erfindungsgemäß ist die Verarbeitung der Daten mit den genannten Variablen von den bisherigen, durch das Netzwerkprotokoll festgelegten, die Kommunikation, Verifikation usw. sicherstellenden Zusätzen befreit, so daß die Programmierung der entsprechenden Prozessoren, Controller o. ä. in den entsprechenden Knoten ohne Berücksichtigung der für die Kommunikation in dem Netzwerk gegebenen Besonderheiten erfolgen kann. Hierdurch wird der Programmierer von den netzwerkspezifischen Programmierungen weitgehend befreit und kann sich daher auf seine applikationsspezifische Programmierung konzentrieren. Dabei kann der Programmierer in der ihm gewohnten Weise mit Variablen hantieren, wobei lediglich die Funktion der Variablen charakterisierende Angaben gemacht werden müssen, die eine initialisierende Funktion für in Form von Unterprogrammen ablaufende Verfahrensabläufe haben. Diese im System programmierten Verfahrensabläufe sorgen für eine geeignete Datenübertragung und die Durchführung der erforderlichen Verifikationen und Kontrollroutinen im Hinblick auf die Art der betroffen Variablen.

Die Erfindung soll im folgenden anhand von in der Zeichnung dargestellten Ausführungsbeispielen näher erläutert werden. Es zeigt:

Figur 1 - eine schematische Darstellung von Funktionsebenen eines Netzwerks

Figur 2 - eine schematische Darstellung der in den Funktionsebenen ablaufenden Prozessen

Figur 3 - eine Darstellung der Architektur der erfindungsgemäßen Variablen

Figur 4 - ein Beispiel für eine Programmierung unter Verwendung der erfindungsgemäßen Variablen

Figur 5 - ein Vergleichsbeispiel für die Programmierung des gleichen Sachverhalts im herkömmlichen CAN-Netzwerk

Figur 6 - eine prinzipielle Darstellung der Implementierung der Verarbeitung von Variablen mit einem Programm

Figur 7 - eine schematische Darstellung der Implementierung der Verarbeitung von Variablen mit einem Controller

Figur 8 - eine schematische Darstellung der Implementierung der Verarbeitung von Variablen mit einem mikroprogrammierten Controller.

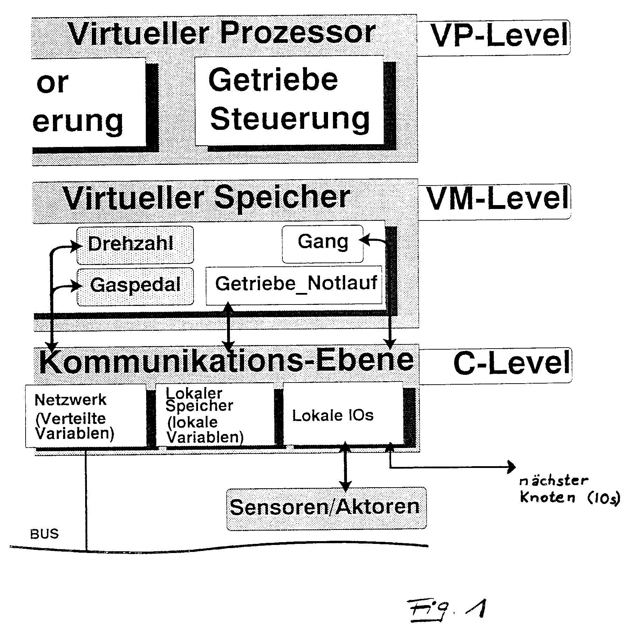

In Figur 1 ist ein Knoten des Netzwerkes in der Verbindung zu einem Bus dargestellt. Der Bus verbindet alle Knoten miteinander und über ihn findet die Kommunikation zwischen den Knoten statt.

Der Knoten ist schematisch in drei Ebenen aufgeteilt, die Kommunikations-Ebene, eine virtuelle Speicherebene und eine virtuelle Prozessorebene. In der Kommunikationsebene (C-Level) erhält der Knoten Daten aus dem Netzwerk (verteilte Variablen), aus einem lokalen Speicher (lokale Variablen) und aus Ein-/Ausgängen (IOs), die einerseits die Verbindung zu Sensoren/Aktoren des zu steuernden Prozesses darstellen und andererseits eine weitere Kopplungsmöglichkeit ("enge" Kopplung) über separate Leitungen zu einem nächsten Knoten bilden. Diese drei unterschiedlichen Arten von Daten werden in der Ebene des virtuellen Speichers in Form von logischen Variablen "Drehzahl", "Gaspedal", "Gang", "Getriebe" gehandhabt. Die Variablen enthalten somit nur noch die Daten, die einer bestimmten Funktion (Gaspedal, Drehzahl usw.) zugeordnet sind, sowie eine Charakterisierung dieser Funktion.

In einer virtuellen Prozessorebene werden die Variablen verarbeitet und übergeordnet Befehle für die anzusteuernden Funktionsgruppen (Getriebe, Motor) erstellt. Diese werden in Form der Variablen in die Kommunikationsebene überführt, wo aufgrund eines Unterprogramms für die betreffende Variablen-Art die für eine Kommunikation in dem betreffenden Netzwerk erforderlichen Schritte ausgeführt werden. Die logische Verarbeitung der Daten findet somit in Form der Variablen statt.

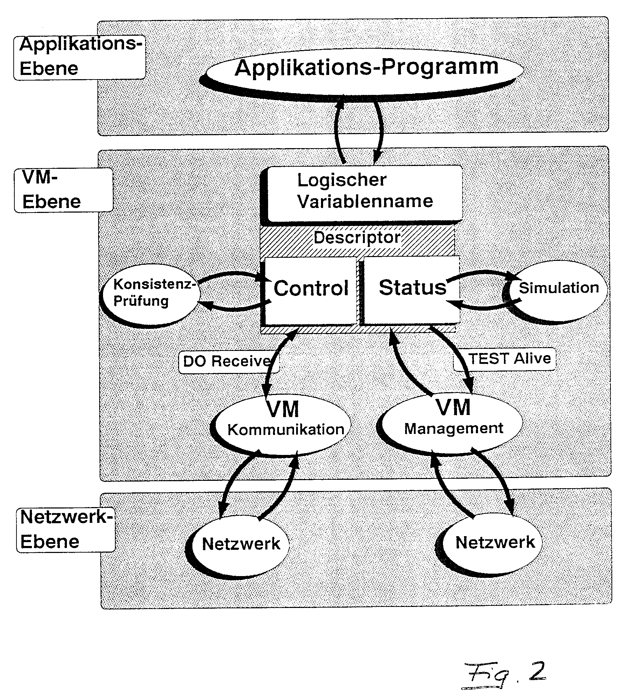

Dieser Zusammenhang wird anhand der Figur 2 deutlich. In einer Applikationsebene läuft das Applikationsprogramm ab, das mit den logischen Variablen durchgeführt wird. In der VM-Ebene wird die Variable mit dem logischen Variablennamen und einem Descriptor mit Kontroll- und Statuszusätzen gehandhabt.

Diese lösen Unterprogramme aus, die in Figur 2 mit "Konsistenz-Prüfung", VM-Management und VM-Kommunikation bezeichnet sind. In der VM-Ebene werden Prozesse bereitgestellt, die auf die Services der darunterliegenden Netzwerk-Schichten zurückgreifen und die Kontroll- und Statuskomponenten des Descriptors einer Botschaft bedienen. In diesem Zusammenhang kann die automatische Erstellung eines Botschaftsdescriptors aus den initialen Daten der zugehörigen Variablen des Applikationsprogrammes, z. B. in Verbindung mit dem Übersetzungslauf (Assembler, Compiler) des Quell-Codes des Applikationsprogramms eine komplexe Zuordnung der Parameter des Descriptors nach sich ziehen. Eine Form dieser Parametererstellung, wie sie bei Netzwerken üblich und angebracht sein kann, ist die Netzwerk-Simulation, wie sie in der DE 38 39 675 A1 beschrieben ist.

Die Applikation greift über typische Schreib/Leseoperationen auf die Variable zu. Diese Schreib/Leseoperationen werden implizit durch die Benutzung der Variablen ausgeführt. Im Falle einer Verletzung einer der in der Definition der Variablen ausgeführten Spezifikationen muß eine entsprechende Statusinformation an die Applikation weitergegeben werden. Diese Statusinformation kann an die Applikation über bekannte Mechanismen, wie z. B. "exception-interrupt" weitergegeben werden.

Die Verbindung zum Netzwerk erfolgt über die VM-Kommunikation, durch die die Daten der Variablen endweder über das Netzwerk gesendet oder empfangen werden. Damit sind Steuerfunktionen verbunden, die zum Teil recht komplex sein können. Dies gilt beispielsweise für Variablen mit einer hohen Konsistenzforderung, die z. B. auf der Netzwerkebene einer Punkt-Zu-Punkt-Verbindung entsprechen und dementsprechend den gesicherten Auf- und Abbau einer Verbindung als Basis für eine Kommunikation erfordern.

Durch das VM-Management wird dafür gesorgt, daß die Konsistenz des Gesamtsystems gesichert wird. Hierbei wird gegebenenfalls eine innerhalb des Variablen-Descriptors getroffene Definition geprüft, ob die verteilten Knoten, die für die Kommunikation zur Bereitstellung von Variablen notwendig sind, auch verfügbar sind, da durch einen Fehler ein solcher Knoten ausfallen und die Arbeit mit der Variablen gestört werden könnte. Durch das VM-Management wird die Systemintegrität, Systemverfügbarkeit, Systemsicherheit und System-Fail-Save-Funktionen usw. gewährleistet.

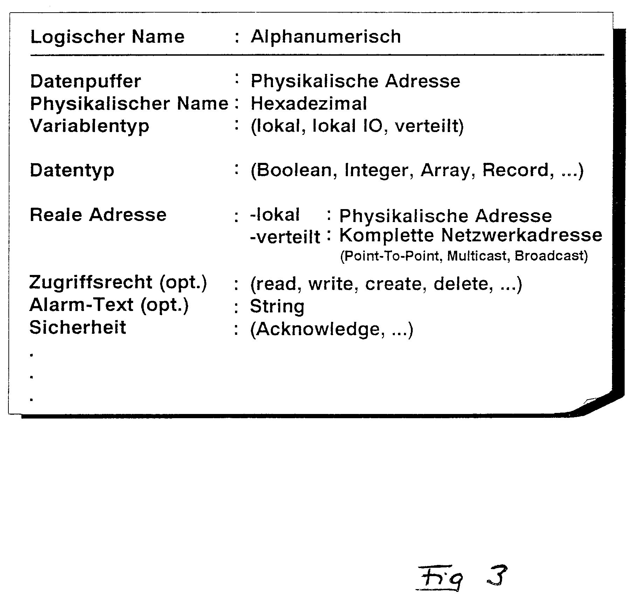

Figur 3 zeigt den Aufbau einer erfindungsgemäß verwendeten Variablen. Der Variablen werden durch die Applikation initiale Daten in Form sogenannter Attribute durch den Anwendungsprogrammierer zugeordnet. Das ist eine in der Software-Technik bekannte und akzeptierte Verfahrensweise. Hieraus ergeben sich drei Blöcke der Variablen, nämlich der logische Name, ein Steuerblock und ein Statusblock, wie dies bereits in Figur 2 angedeutet ist.

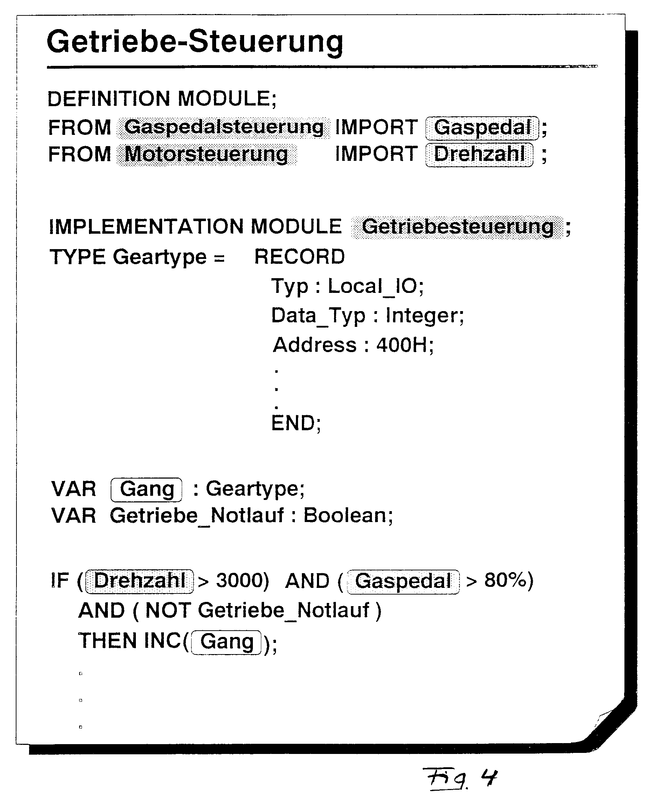

Figur 4 zeigt ein Applikationsbeispiel für ein Netzwerk in einem Automobil, das mit logischen Variablennamen programmiert ist. Die zu überprüfenden und verarbeitenden Daten werden mit Hilfe der Variablen "Gaspedal" und "Drehzahl" angefordert (Import ...) und in einen Befehl für die "Getriebesteuerung" umgesetzt. Die Verarbeitung der Daten erfolgt mit Hilfe der Variablen in der Zeile

```
IF ("Drehzahl" > 3000) AND ("Gaspedal" > 80 %)
AND (NOT "Getriebe-Notlauf")
THEN INC ("Gang")
```

Dieses Programmierbeispiel zeigt, daß das Getriebe auf einen höheren Gang geschaltet werden soll, wenn die Drehzahl über 3000 liegt und das Gaspedal um mehr als 80 % eingedrückt ist und daß Getriebe nicht auf "Notlauf" geschaltet ist.

Der entsprechende Befehl, das Getriebe auf den nächsten Gang zu schalten, wird mit der Variablen "Gang" erzeugt und in der VM-Ebene in in diesem Netzwerk kommunikationsfähige Messages bei Ablauf der anhand der Figur 2 beschriebenen Funktionen umgesetzt. Dieses Beispiel zeigt, daß der Applikationsprogrammierer das Problem in seiner ihm bekannten Weise über die Benutzung von Variablen lösen kann, ohne sich dabei um die hochkomplexen Detailprobleme der damit verbundenen Kommunikation zwischen Knoten z. B. über ein Netz kümmern zu müssen.

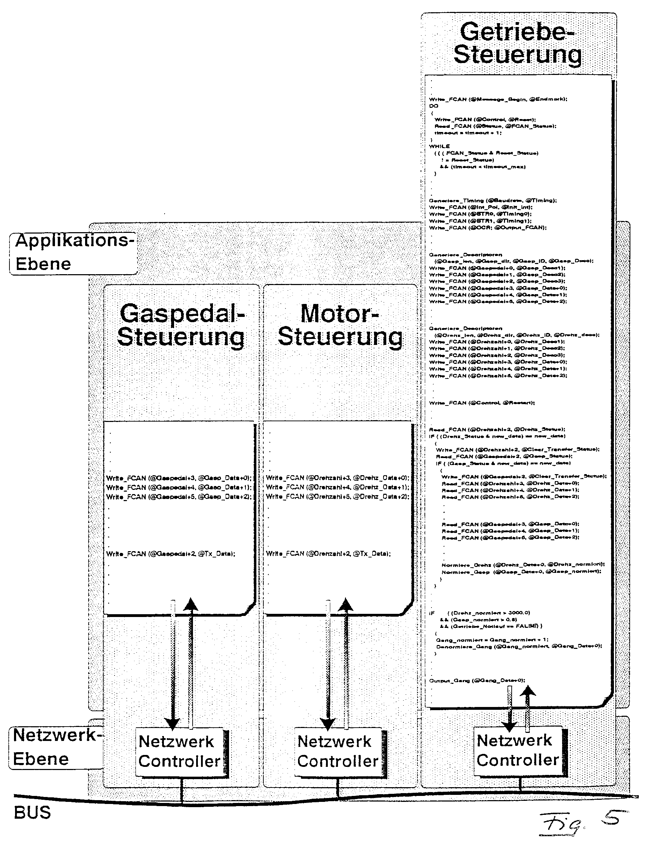

Figur 5 zeigt die Programmierung für denselben Sachverhalt innerhalb des CAN-Protokolls. Es ist erkennbar, daß die Programmierung außerordentlich komplex wird, wenn noch komplexere Zusammenhänge in der Applikationsebene zu berücksichtigen sind.

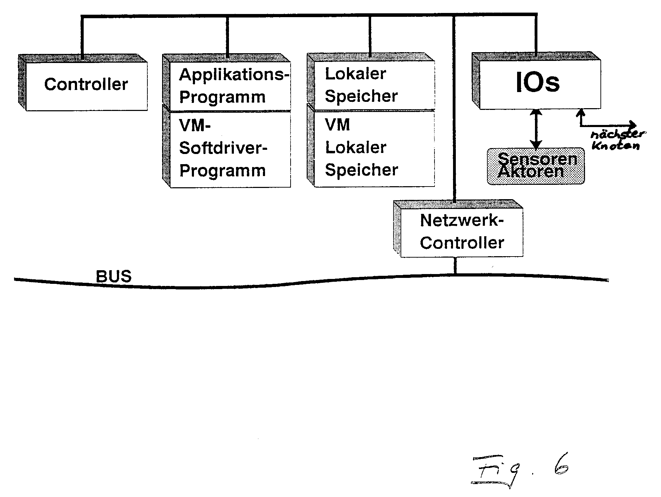

Figur 6 zeigt die Implementierung der Bearbeitung von Variablen mit Software, wobei der Applikations-Controller mit verwendet wird. Der Programmspeicherbereich enthält nun zusätzlich einen VM-Software-Treiber für die Realisierung der Funktionalität der Variablen. Die sogenannten lokalen Variablen werden im lokalen Speicher gehalten. Die Netzwerk-Variablen führen über die VM-Software-Treiber und über den Netzwerk-Controller zu einer Netzwerk-Kommunikation. "Eng" gekoppelte Variable werden über die VM-Software-Treiber in entsprechende IO-Port-Operationen übertragen. Entsprechendes gilt für die Kommunikation mit den Prozeß-Sensoren und -Aktoren, die über IO-Ports angeschlossen sind. Mit der "engen" Kopplung von Variablen über separate Leitungen wird die Vorhersagbarkeit der Kommunikationsverzögerung gegenüber der Kommunikation über das Netzwerk verbessert.

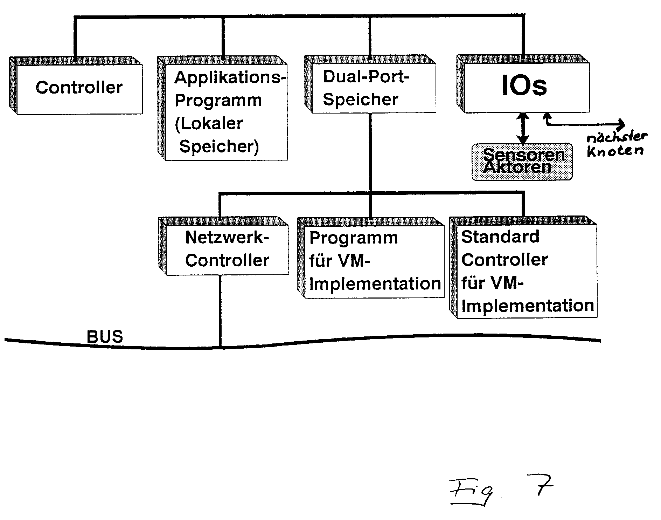

Figur 7 zeigt eine Implementierungslösung, die bezüglich der Hardware aufwendiger, jedoch bezüglich der Echtzeitfähigkeit vorteilhafter ist. Die Prozesse der VM-Ebene (vgl. Figur 2) werden in Verbindung mit dem Netzwerk-Controller über einen eigenen Unterrechner (Standard-Controller) dargestellt und realisiert. Die Kopplung zum Applikations-Controller erfolgt z. B. über einen Dual-Port-Speicher (RAM).

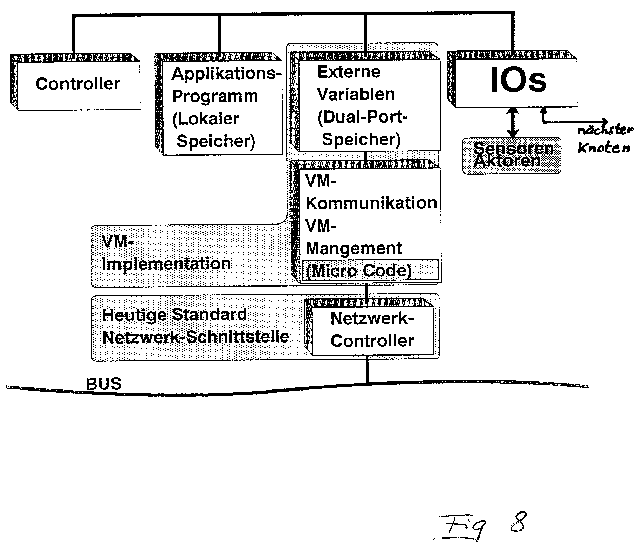

Figur 8 zeigt die Implementierung der VM-Prozesse über einen eigens dafür vorgesehenen mikroprogrammierten Controller.

Dieser mikroprogrammierte Controller steuert zum einen den Netzwerk-Controller und übergibt die Variablen über einen Dual-Port-Speicher an den eigentlichen Applikationsprozessor Diese Implementation geht also von einer Chip-Realisierung mit einem entsprechenden Steuerwerk aus, dessen Startfunktion z. B. in Form eines sogenannten Mikrocodes realisiert ist.

**Patentansprüche**

1. Verfahren zur Übertragung von Daten in einem Netzwerk mit einer Mehrzahl von Knoten, die über das Netzwerk oder Sensoren Daten empfangen, die empfangenen Daten in vorgegebenen Routinen verarbeiten und Aktoren betätigen und/oder Daten über das Netzwerk aussenden, wobei eine Vielzahl von in einem Netzwerkprotokoll festgelegten, den Kommunikationsablauf sicherstellenden Schritten und Kontrollroutinen ausgeführt werden, **dadurch gekennzeichnet, daß** die Verarbeitung der Daten in Form von Variablen erfolgt, die die einer Funktion entsprechenden und die betreffende Funktion charakterisierenden Daten und den Kommunikationsablauf und entsprechende Kontrollroutinen steuernde Verfahrensabläufe initialisierende Daten enthalten.

**Virtueller Prozessor**  VP-Level

or
erung

**Getriebe
Steuerung**

**Virtueller Speicher**  VM-Level

Drehzahl

Gang

Gaspedal

Getriebe_Notlauf

**Kommunikations-Ebene**  C-Level

Netzwerk
(Verteilte
Variablen)

Lokaler
Speicher
(lokale
Variablen)

Lokale IOs

nächster
Knoten (IOs)

Sensoren/Aktoren

BUS

Fig. 1

Fig. 2

| Logischer Name | : Alphanumerisch |
| --- | --- |
| Datenpuffer | : Physikalische Adresse |
| Physikalischer Name | : Hexadezimal |
| Variablentyp | : (lokal, lokal IO, verteilt) |
| Datentyp | : (Boolean, Integer, Array, Record, ...) |
| Reale Adresse | : -lokal : Physikalische Adresse<br>-verteilt : Komplette Netzwerkadresse<br>(Point-To-Point, Multicast, Broadcast) |
| Zugriffsrecht (opt.) | : (read, write, create, delete, ...) |
| Alarm-Text (opt.) | : String |
| Sicherheit | : (Acknowledge, ...) |
| . | |
| . | |
| . | |

Fig 3

# Getriebe-Steuerung

```
DEFINITION MODULE;
FROM Gaspedalsteuerung IMPORT Gaspedal ;
FROM Motorsteuerung    IMPORT Drehzahl ;


IMPLEMENTATION MODULE  Getriebesteuerung ;
TYPE Geartype =    RECORD
                      Typ : Local_IO;
                      Data_Typ : Integer;
                      Address : 400H;
                      .
                      .
                      .
                      END;


VAR  Gang  : Geartype;
VAR  Getriebe_Notlauf : Boolean;


IF ( Drehzahl > 3000)  AND ( Gaspedal > 80%)
   AND ( NOT Getriebe_Notlauf )
   THEN INC( Gang );
   .
   .
   .
```

Fig. 4

**Getriebe-Steuerung**

```
Write_FCAN (@Message_Begin, @Endmark);
DO
{
    Write_FCAN (@Control, @Reset);
    Read_FCAN (@Status, @FCAN_Status);
    timeout = timeout + 1;
}
WHILE
( ( ( FCAN_Status & Reset_Status)
    ! = Reset_Status)
    && (timeout < timeout_max)
)

Generiere_Timing (@Baudrate, @Timing);
Write_FCAN (@Int_Pol, @Int_Int);
Write_FCAN (@BTR0, @Timing0);
Write_FCAN (@BTR1, @Timing1);
Write_FCAN (@OCR, @Output_FCAN);

Generiere_Descriptoren
    (@Gasp_len, @Gasp_dir, @Gasp_ID, @Gasp_Desc);
Write_FCAN (@Gaspedal+0, @Gasp_Desc1);
Write_FCAN (@Gaspedal+1, @Gasp_Desc2);
Write_FCAN (@Gaspedal+2, @Gasp_Desc3);
Write_FCAN (@Gaspedal+3, @Gasp_Data+0);
Write_FCAN (@Gaspedal+4, @Gasp_Data+1);
Write_FCAN (@Gaspedal+5, @Gasp_Data+2);

Generiere_Descriptoren
    (@Drehz_len, @Drehz_dir, @Drehz_ID, @Drehz_desc);
Write_FCAN (@Drehzahl+0, @Drehz_Desc1);
Write_FCAN (@Drehzahl+1, @Drehz_Desc2);
Write_FCAN (@Drehzahl+2, @Drehz_Desc3);
Write_FCAN (@Drehzahl+3, @Drehz_Data+0);
Write_FCAN (@Drehzahl+4, @Drehz_Data+1);
Write_FCAN (@Drehzahl+5, @Drehz_Data+2);

Write_FCAN (@Control, @Restart);

Read_FCAN (@Drehzahl+2, @Drehz_Status);
IF ( (Drehz_Status & new_data) == new_data)
{
    Write_FCAN (@Drehzahl+2, @Clear_Transfer_Status);
    Read_FCAN (@Gaspedal+2, @Gasp_Status);
    IF ( (Gasp_Status & new_data) == new_data)
    {
        Write_FCAN (@Gaspedal+2, @Clear_Transfer_Status);
        Read_FCAN (@Drehzahl+3, @Drehz_Data+0);
        Read_FCAN (@Drehzahl+4, @Drehz_Data+1);
        Read_FCAN (@Drehzahl+5, @Drehz_Data+2);

        Read_FCAN (@Gaspedal+3, @Gasp_Data+0);
        Read_FCAN (@Gaspedal+4, @Gasp_Data+1);
        Read_FCAN (@Gaspedal+5, @Gasp_Data+2);

        Normiere_Drehz (@Drehz_Data+0, @Drehz_normiert);
        Normiere_Gasp  (@Gasp_Data+0, @Gasp_normiert);
    }
}

IF    ( (Drehz_normiert > 3000.0)
    && (Gasp_normiert > 0.6)
    && (Getriebe_Notlauf == FALSE) )
{
    Gang_normiert = Gang_normiert + 1;
    Denormiere_Gang (@Gang_normiert, @Gang_Data+0);
}

Output_Gang (@Gang_Data+0);
```

**Applikations-Ebene**

**Gaspedal-Steuerung**

```
Write_FCAN (@Gaspedal+3, @Gasp_Data+0);
Write_FCAN (@Gaspedal+4, @Gasp_Data+1);
Write_FCAN (@Gaspedal+5, @Gasp_Data+2);

Write_FCAN (@Gaspedal+2, @Tx_Data);
```

**Motor-Steuerung**

```
Write_FCAN (@Drehzahl+3, @Drehz_Data+0);
Write_FCAN (@Drehzahl+4, @Drehz_Data+1);
Write_FCAN (@Drehzahl+5, @Drehz_Data+2);

Write_FCAN (@Drehzahl+2, @Tx_Data);
```

**Netzwerk-Ebene**

| Netzwerk Controller | Netzwerk Controller | Netzwerk Controller |

**BUS**

Fig. 5

| Controller | Applikations-Programm | Lokaler Speicher | IOs |
|---|---|---|---|
| | VM-Softdriver-Programm | VM Lokaler Speicher | |

nächster Knoten

Sensoren Aktoren

Netzwerk-Controller

BUS

Fig. 6

| Controller | Applikations-Programm (Lokaler Speicher) | Dual-Port-Speicher | IOs |
|---|---|---|---|

Sensoren Aktoren

nächster Knoten

| Netzwerk-Controller | Programm für VM-Implementation | Standard Controller für VM-Implementation |
|---|---|---|

BUS

Fig 7

Fig. 8

Controller

Applikations-
Programm
(Lokaler
Speicher)

Externe
Variablen
(Dual-Port-
Speicher)

IOs

Sensoren
Aktoren

nächster
Knoten

VM-
Kommunikation
VM-
Mangement
(Micro Code)

VM-
Implementation

Heutige Standard
Netzwerk-Schnittstelle

Netzwerk-
Controller

BUS